# FASCICULE DE BREVET EUROPEEN

(11) **EP 1 890 575 B1**
(45) Date de publication et mention de la délivrance du brevet: **16.04.2014**
(21) Numéro de dépôt: 05800509.1
(22) Date de dépôt: 15.09.2005
(51) Int. Cl.: A47F 3/04

(54) **VITRAGE ISOLANT, NOTAMMENT POUR OUVRANT D'ENCEINTE REFRIGEREE**
ISOLIERGLASSCHEIBE, INSBESONDERE FÜR DIE TÜR EINES KÜHLRAUMES
INSULATING GLAZING, IN PARTICULAR FOR REFRIGERATED CHAMBER DOOR

(30) Priorité: 26.05.2005 US 137373
(43) Date de publication de la demande: 27.02.2008
(73) Titulaire: SAINT-GOBAIN GLASS FRANCE, 92400 Courbevoie (FR)
(72) Inventeur: RIBLIER, Luc-Michel, F-77600 BUSSY SAINT-GEORGES (FR); GRUSSAUTE NGHIEM, Hélène, F-60190 ARSY (FR); WATCHI, Marie Isabelle, F-75013 PARIS (FR)
(74) Mandataire: Aupetit, Muriel J. C.
(86) Numéro de dépôt international: PCT/FR2005/050744
(87) Numéro de publication internationale: WO 2006/125874

(56) Documents cités:
- WO-A-03/008877
- US-A- 5 784 853

## Description

L'invention concerne un vitrage isolant destiné à l'ouvrant d'une enceinte réfrigérée, enceinte dans laquelle sont exposés des produits froids ou surgelés, tels que des produits alimentaires ou boissons, ou tous autres produits nécessitant une conservation dans le froid, par exemple des produits pharmaceutiques ou même des fleurs. Le vitrage isolant est constitué d'au moins deux substrats verriers séparés par une lame de gaz et pourvus pour au moins l'un d'eux d'un revêtement bas émissif.

Lorsque des produits conservés dans une enceinte réfrigérée doivent rester visibles comme c'est le cas dans de nombreux locaux commerciaux actuels, on équipe l'enceinte réfrigérée de parties vitrées qui la transforment en une " vitrine " réfrigérée dont la dénomination commune est " meuble frigorifique de vente ". Il existe plusieurs variantes de ces " vitrines ". Certaines ont la forme d'armoire et alors, c'est la porte elle-même qui est transparente, d'autres constituent des coffres et c'est le couvercle horizontal qui est vitré pour permettre l'observation du contenu.

Dans ces types de présentoirs, il est nécessaire que les marchandises restent parfaitement visibles de la clientèle afin qu'il soit possible de présélectionner les marchandises sans ouvrir la " vitrine ".

Cependant, l'un des problèmes principaux rencontrés pour ces vitrines est l'apparition de buée sur la face extérieure de l'ouvrant se situant côté magasin. En effet, cette face extérieure est refroidie par l'ambiance réfrigérée se trouvant à l'opposé, côté face intérieure en contact de l'ambiance intérieure de l'enceinte, tout en étant en contact avec l'atmosphère ambiante du magasin, bien plus chargée en humidité, et à une température bien plus élevée ; lorsque la température de cette surface extérieure est à une température inférieure au point de rosée, il apparaît de la buée ce qui gêne la visibilité des marchandises.

Un autre problème important est également la formation de buée, voire même de givre sur la face intérieure de l'ouvrant lorsque l'on ouvre la vitrine pour prendre les marchandises. En effet, la surface du substrat verrier intérieur qui se trouvait être à une température très basse, voire en-dessous de 0°C, se trouve alors en contact de l'atmosphère ambiante, bien plus chargée en humidité, et à une température bien plus élevée ; la température du substrat intérieur est alors inférieure à la température du point de rosée, ce qui engendre un phénomène de condensation sur le substrat, voire même de givre lorsque la température de ce substrat est négative. La présence de buée ou de givre gêne la visibilité des marchandises, et il faut plusieurs minutes, voire dizaines de minutes, pour obtenir une totale disparition de la buée ou du givre.

Pour limiter ces inconvénients, il a été conçu dans l'art antérieur; des vitrages isolants à propriété d'isolation thermique renforcée, à savoir des doubles ou triples vitrages pourvus d'un ou de plusieurs revêtements bas émissifs, et dont le substrat en contact avec l'intérieur de l'enceinte est chauffant.

On connaît par ailleurs d'après la demande de brevet WO 03/008877, un vitrage à isolation thermique renforcée pour enceinte réfrigérée qui assure, selon ce document, la disparition de buée sur la face extérieure de l'ouvrant, du côté magasin.

Ce type de vitrage isolant consiste en un triple vitrage comprenant trois substrats verriers de 3 mm d'épaisseur, espacés par des lames de gaz d'épaisseur identique de 8 ou 13 mm et constituées d'air, d'argon ou de krypton, deux revêtements bas émissifs étant disposés sur les faces 2 et 5 du vitrage (en comptant à partir de la face la plus extérieure du vitrage en position fermée sur l'enceinte).

Le vitrage présente selon ce document un coefficient de transfert thermique U inférieur ou égal à 0,2 BTU/hr.sq.ft.F ou encore 1,11 W/m².K. On rappelle que 1,0 W/K.m² correspond à 0,18 BTU/hr.sq.ft.F.

L'amélioration du coefficient de transfert thermique U assure, en position fermée de l'ouvrant, à la surface extérieure d'être relativement chaude par rapport à la température qu'elle pourrait présenter en raison de l'ambiance froide existante à son opposé ; cette surface extérieure, côté magasin, est ainsi à une température supérieure au point de rosée ce qui évite la formation de buée sur cette surface extérieure lorsque la vitrine est fermée, ne nécessitant pas d'élément chauffant sur le substrat extérieur.

Cependant, si l'inconvénient de la buée du côté magasin est résolu, l'inconvénient de la présence de givre, côté enceinte, reste latent. En effet, un tel vitrage nécessite un certain délai, une voire plusieurs minutes, pour assurer la disparition du givre sur la surface intérieure du vitrage. En outre, du fait que le coefficient de transfert thermique U est meilleur, la surface extérieure du substrat intérieur en contact de l'ambiance réfrigérée sera d'autant plus froide, ce qui favorisera une augmentation de la quantité de givre se formant sur le substrat à l'ouverture de la vitrine et allongera le délai pour qu'il disparaisse.

Aussi, pour résoudre ce dernier inconvénient, éviter ou faire disparaître rapidement la formation de buée ou de givre sur la face interne du vitrage en contact avec l'intérieur de l'enceinte, on prévoit de manière connue comme déjà dit, des éléments chauffants disposés sur cette face interne du vitrage.

Cependant, l'électricité consommée par de telles vitrines réfrigérées, notamment en raison des éléments chauffants déposés sur les substrats, ne va pas dans le sens d'une économie d'énergie, préoccupation tout à fait d'actualité en matière d'environnement et de développement durable, et représente en outre des coûts élevés pour les magasins.

Par ailleurs, les diverses couches fonctionnelles utilisées, dont les revêtements bas émissifs, dégradent de manière connue la transmission lumineuse des vitrages. Pour s'assurer que les marchandises sont correctement visibles depuis l'extérieur de l'enceinte, on n'hésite pas à équiper l'intérieur des enceintes, d'éclairages qui, outre l'énergie supplémentaire dépensée, entraînent nécessairement un dégagement de chaleur pouvant dégrader la qualité de congélation des produits exposés en devanture et entraîner une consommation énergétique supplémentaire du groupe de froid correspondant.

L'invention a donc pour but de fournir une solution optimale de vitrage isolant à propriété thermique renforcée destiné à être utilisé pour une vitrine réfrigérée, solution qui évite toute formation de buée ou de givre, même dans des conditions difficiles d'ambiances extérieure et intérieure et de fréquence et de temps d'ouverture de la vitrine correspondant au temps nécessaire pour se servir ou réapprovisionner en marchandises la vitrine, et qui soit performante en terme d'économie d'énergie et assure une qualité et un confort de visibilité des produits aménagés dans ladite vitrine.

On entend dans la suite de la description par intérieur et extérieur, les qualificatifs des éléments qui sont tournés vers l'intérieur ou respectivement l'extérieur de l'enceinte réfrigérée lorsque l'ouvrant est en position fermée.

On entend par interne et externe, les qualificatifs des éléments qui sont tournés vers l'intérieur et respectivement vers l'extérieur du vitrage isolant.

Selon l'invention, le vitrage isolant destiné en particulier à un ouvrant d'enceinte réfrigérée comprend au moins deux substrats en verre, au moins un intercalaire à basse conductivité thermique qui maintient espacés les deux substrats, un revêtement bas émissif qui est déposé au moins en partie sur au moins un des substrats, caractérisé en ce que
- l'intercalaire présente une conductivité thermique inférieure 1 W/m.K, de préférence inférieur à 0 ,3 W/m.K,
- l'espace entre au moins deux substrats est rempli d'au moins un gaz rare,
- le vitrage est dépourvu d'élément chauffant,
- le vitrage présente un coefficient de conductivité thermique U inférieur à 1,2 W/m².K, de préférence inférieur à 1,15 W/m².K avec un remplissage de gaz d'au moins 85%,
- le vitrage présente une transmission lumineuse d'au moins 67% et une réflexion lumineuse inférieure à 18%,
- le vitrage comporte en outre un revêtement antigivre déposé sur une partie au moins de la face externe d'un substrat.

Selon une caractéristique préférée, le gaz est choisi parmi l'argon, le krypton et le xénon.

Selon une autre caractéristique préférée, un revêtement bas-émissif est au moins disposé en face 2 et/ou 3 et/ou 4 du vitrage.

On numérote les faces d'un vitrage de 1 à 4 pour un double vitrage ou de 1 à 6 pour un triple vitrage, les faces du vitrages telles que la face 1 correspond à la surface extérieure du vitrage en contact avec l'atmosphère ambiante, tandis que la face 4 ou respectivement 6 correspond à la surface en contact avec l'enceinte réfrigérée.

De préférence, un revêtement anti-reflet est déposé sur au moins l'un des substrats, de préférence en face 1 et/ou en face 3, et/ou en face 5 du vitrage.

Selon un premier mode de réalisation de l'invention, le vitrage isolant est un triple vitrage comportant trois substrats verriers, un premier substrat dont la face externe est destinée à être en contact avec l'intérieur de l'enceinte en position fermée de l'ouvrant, un second substrat ou substrat intermédiaire, et un troisième substrat dont la face externe est destinée à être en contact avec l'ambiance extérieure de l'enceinte, et séparés entre eux par l'intercalaire à basse conductivité thermique,
- l'épaisseur des substrats étant comprise entre 2 et 5 mm, et de préférence égale à 3 ou 4 mm,
- au moins l'un des espaces entre les substrats étant rempli d'au moins un gaz rare,
- l'épaisseur des lames de gaz étant d'au moins 4 mm,
- un revêtement bas émissif étant déposé en face 2 et/ou 4 du vitrage,
- le revêtement antigivre étant déposé sur une partie au moins de la face externe du troisième substrat,
- le vitrage présentant un coefficient de conductivité thermique U inférieur à 1,1 W/m².K, voire même inférieur à 0,95 ou 0,80, avec un remplissage de gaz d'au moins 85%;
- le vitrage présente une transmission lumineuse d'au moins 67% et une réflexion lumineuse extérieure inférieure à 18%.

Selon une caractéristique préférée , le triple vitrage comporte un revêtement bas émissif sur les faces 2 et 4, et présente un coefficient de transfert thermique U inférieur à 1,0 W/m².K.

Avantageusement, le revêtement bas émissif est déposé sur la face du vitrage associée à la lame de gaz la plus épaisse.

De préférence, au moins un revêtement anti-reflet est déposé sur l'une des faces du vitrage, de préférence sur au moins l'une des faces, 1, 3 ou 5.

Selon une variante de réalisation, l'une des lames de gaz présente une épaisseur de 8 mm, tandis que l'autre lame de gaz présente une épaisseur d'au moins 10 mm, les lames de gaz étant de l'argon.

Selon une autre variante de réalisation, l'une des lames de gaz est du krypton et présente une épaisseur de 8 mm, tandis que l'autre lame de gaz est de l'air et présente une épaisseur d'au moins 10 mm.

Selon un second mode de réalisation de l'invention, le vitrage isolant est un double vitrage comprenant deux substrats verriers, un premier substrat dont la face externe est destinée à être en contact avec l'intérieur de l'enceinte en position fermée de l'ouvrant, un second substrat dont la face externe est destinée à être en contact avec l'ambiance extérieure de l'enceinte, séparés entre eux par l'intercalaire à basse conductivité thermique, l'espace entre les substrats étant rempli d'un gaz rare,
- l'épaisseur des substrats étant égale à 3 ou 4 mm,
- l'espace entre les substrats étant rempli d'au moins un gaz rare,
- l'épaisseur de la lame de gaz étant d'au moins 8 mm,
- un revêtement bas émissif étant déposé au moins en face 2 du vitrage,
- le revêtement antigivre étant déposé sur une partie au moins de la face externe du premier substrat,
- le vitrage présentant un coefficient de conductivité thermique U inférieur à 1,15 W/m².K avec un remplissage de gaz d'au moins 85%;
- le vitrage présentant une transmission lumineuse d'au moins 75% et une réflexion lumineuse extérieure inférieure à 12%.

Selon une caractéristique préférée , un autre revêtement bas émissif est déposé en face 3 du vitrage selon ce second mode de réalisation.

De préférence, il présente un coefficient de conductivité thermique U inférieur à 1,05 W/m².K avec un remplissage de gaz d'au moins 92%.

Selon une variante de réalisation, la lame de gaz est du krypton.

Selon une autre variante de réalisation, la lame de gaz est du xénon avec une épaisseur de 8 mm.

Avantageusement, le double vitrage comporte en face 1 et/ou 3 un revêtement anti-reflet , et présente une transmission lumineuse de plus de 80% et une réflexion lumineuse extérieure inférieure à 10%.

Selon une autre caractéristique du vitrage isolant de l'invention, le revêtement antigivre est tel que lorsque le vitrage pourvu du revêtement antigivre est mis en contact, du côté du revêtement avec une ambiance de température descendant à au plus -30°C, en particulier -15°C, -18°C ou -24°C, puis mis en contact avec une atmosphère à température au moins égale à 0, de préférence comprise entre 10 et 35, notamment 15 et 30 et en particulier 23 et 27°C et avec au moins 25 % d'humidité résiduelle, aucun givre ne se forme pendant 12 s au moins, de préférence 1 min au moins, en particulier 2 min au moins, voire aussi longtemps que 3 min au moins.

Ce revêtement antigivre comporte un composé antigel abaissant la température de cristallisation tel qu'un sel, notamment KCI, NaCl ou équivalent en solution et/ou un alcool et/ou un polymère, copolymère, prépolymère ou oligomère hydrophile approprié, éventuellement dans l'eau, et éventuellement un ou plusieurs tensioactifs, ce composé présentant éventuellement un caractère hydrophobe sur une partie de sa surface.

Avantageusement, le composé antigel est associé à au moins un autre composé de manière à obtenir une interaction physique ou chimique pour assurer un renfort mécanique du revêtement.

Cet antigel est par exemple du polyvinylpyrrolidone qui est associé à un polyuréthane de façon à créer une interaction physique, ou il peut s'agir d'un polyol qui est associé à au moins une fonction isocyanate de façon à créer une interaction chimique.

Selon une autre caractéristique du vitrage isolant, l'intercalaire disposé entre les substrats comporte selon un mode de réalisation une première barrière d'étanchéité constituée d'un corps en matière thermoplastique, du type styrène acrylonitrile (SAN) ou polypropylène, mélangée à des fibres de renforcement, de type en verre, et d'une feuille métallique, du type en aluminium ou en inox, couvrant en partie la matière thermoplastique, ainsi qu'une seconde barrière d'étanchéité contre les liquides et la vapeur, du type polysulfure.

Selon un autre mode de réalisation de l'intercalaire, celui-ci est constitué sur au moins une partie de la périphérie du vitrage d'un profilé sensiblement plat qui est solidaire des tranches des substrats et constitué d'inox, d'aluminium ou de matière plastique armé de fibres de renforcement, et comprenant sur la face opposée à la lame de gaz un revêtement métallique constituant une barrière d'étanchéité à la vapeur, aux gaz et aux liquides. Aussi, l'intercalaire présente une résistance linéique au flambage d'au moins 400 N/m.

De préférence, au moins les substrats extérieurs du vitrage isolant de l'invention sont en verre trempé.

Un tel vitrage isolant ci-dessus caractérisé est avantageusement utilisé en tant qu'ouvrant, en particulier pour une enceinte réfrigérée.

Lorsque l'ouvrant comporte, pour supporter le vitrage, un encadrement formé d'aluminium à rupture de pont thermique, il présente avantageusement un coefficient U_{w} de transfert thermique global inférieur à 1,25 W/m².K pour un remplissage de gaz d'au moins 92%.

Lorsque l'ouvrant comporte un encadrement formé de PVC, il présente un coefficient U_{w} de transfert thermique global inférieur à 1,20 W/m².K pour un remplissage de gaz de 92%.

Les inventeurs ont ainsi mis en évidence le type de combinaison des diverses caractéristiques du vitrage qu'il faut mettre en oeuvre pour assurer une solution optimale quant aux performances d'isolement thermique du vitrage, de transmission lumineuse du vitrage, et de non formation de buée et de givre, respectivement, sur les faces extérieure et intérieure du vitrage, lorsqu'il est utilisé en tant qu'ouvrant dans une enceinte réfrigérée.

L'invention porte ainsi sur la combinaison d'un ensemble de caractéristiques du vitrage que sont, en particulier, l'épaisseur de la lame de gaz, le type de gaz, le type d'intercalaire, les types de revêtement fonctionnels utilisés et leur emplacement, et la valeur de coefficient de transfert thermique du vitrage ainsi que la présence d'une couche antigivre.

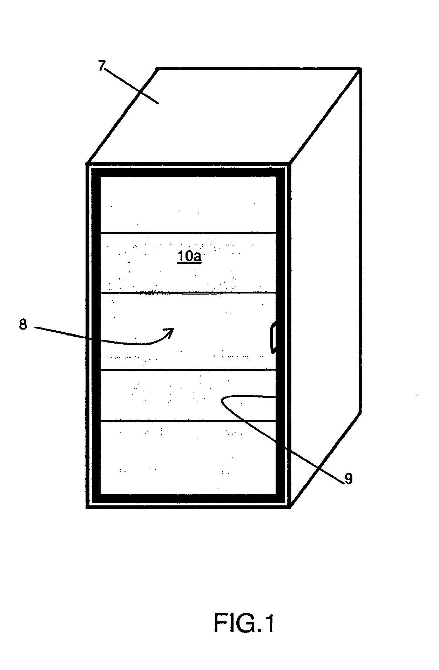

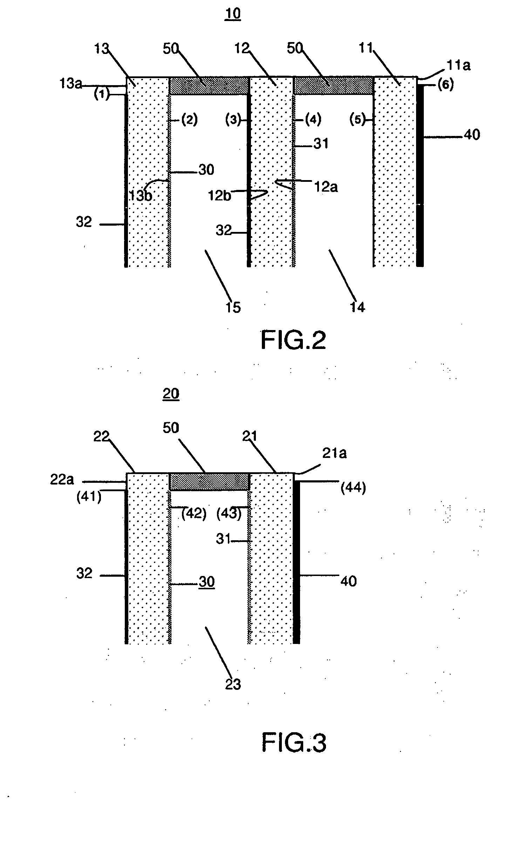

D'autres avantages et caractéristiques de l'invention apparaîtront dans la suite de la description en regard des dessins annexés non à l'échelle sur lesquels les figures 1 et 2 illustrent, respectivement, deux vues partielles en coupe de deux modes de réalisation d'un vitrage selon l'invention.

La figure 1 illustre, selon un premier mode de réalisation de l'invention, un triple vitrage isolant 10 rempli de gaz, dépourvu d'élément chauffant et comportant au moins un revêtement bas-émissif 30 et un revêtement anti-givre 40, présentant un coefficient de transfert thermique U inférieur à 1,2 W/m².K, de préférence inférieur à 1,15 W/m².K avec un taux de remplissage de gaz d'au moins 85%, et un taux de transmission lumineuse extérieure d'au moins 67%, associé à une réflexion lumineuse inférieure à 18%.

Le triple vitrage 10 comporte trois substrats verriers, un premier substrat ou substrat intérieur 11 dont la face externe 11a est destinée à être en contact avec l'intérieur de l'enceinte en position fermée de l'ouvrant, un second substrat ou substrat intermédiaire 12, et un troisième substrat ou substrat extérieur 13 dont la face externe 13a est destinée à être en contact avec l'ambiance extérieure à l'enceinte. Les premier et troisième substrats 11 et 13 sont de préférence en verre trempé.

Les faces des substrats sont notées de 1 à 6 et référencées sur les figures (1) à (6), et correspondent respectivement à la face externe 13a destinée à être en contact avec l'ambiance extérieure à l'enceinte jusqu'à la face 11 a destinée à être en contact avec l'intérieur de l'enceinte en position fermée de l'ouvrant.

L'épaisseur de chacun des substrats est comprise ente 2 et 5 mm, et elle est de préférence de 3 ou 4 mm afin de minimiser le poids global du vitrage et d'optimiser la transmission lumineuse.

Les substrats sont séparés entre eux par un intercalaire 50 à basse conductivité thermique, l'intercalaire pouvant être constitué de deux éléments distincts ou d'un unique élément à cheval sur le substrat intermédiaire.

Cet intercalaire présente un coefficient de conductivité thermique d'au plus 1 W/m.K (ou 1,88 BTU/hr.ft.F), de préférence inférieur à 0,7 W/m.K, et même inférieur à 0,4 W/m.K. On rappelle que 0,534 W/m.K correspond à 1 BTU/hr.ft.F.

Un exemple d'intercalaire présente un corps de base qui est constitué d'une matière thermoplastique, du type styrène acrylonitrile (SAN) ou polypropylène, et de fibres de renforcement, de type en verre, qui sont mélangées à la matière thermoplastique, ainsi qu'une feuille métallique réalisant l'étanchéité aux gaz et à la vapeur d'eau qui est collée sur une partie du corps de base, partie destinée à être disposée à l'opposé de l'espace intérieur du vitrage. Le corps de base, incluant par ailleurs un déshydratant, est déposé en périphérie et dans l'espace de séparation, entre les substrats. Une barrière d'étanchéité supplémentaire contre les liquides et la vapeur, assurant le scellage de l'intercalaire et constituée par exemple par du polysulfure, du polyuréthane, ou du silicone, est disposée du côté de la feuille métallique de l'intercalaire.

Un tel intercalaire, qui est à base de SAN et de fibres de verre, est connu par exemple sous la dénomination commerciale SWISSPACER^{®} de la société SAINT-GOBAIN GLASS lorsque la feuille métallique du corps de base est en aluminium, et sous la dénomination SWISSPACER V^{®} lorsque la feuille métallique du corps de base est en inox, et qui associé à une double barrière en polysulfure, présente un coefficient de conductivité thermique de 0,64 W/m.K. (ou 1,20 BTU/hr.ft.F) pour le SWISSPACER^{®} et de 0,25 W/m.K (ou 0,47 BTU/hr.ft.F) pour le SWISSPACER V^{®}.

On peut encore citer comme type d'intercalaire, l'intercalaire décrit dans la demande WO 01/79644 qui est constitué d'un profilé sensiblement plat disposé, non pas à l'intérieur du vitrage mais à l'extérieur, solidaire des tranches des substrats. Ce profilé peut être à base d'inox, ou d'aluminium ou de matière plastique armé de fibres de renforcement, sa résistance linéique au flambage étant d'au moins 400 N/m. Ce type d'intercalaire comporte au moins sur l'une de ses faces une barrière d'étanchéité contre les gaz, poussières et liquides constituée par un revêtement métallique ou tout autre matériau adapté.

L'intercalaire est par exemple constitué entièrement d'aluminium, d'épaisseur 0,5 mm et présente un coefficient de conductivité thermique de 0,25 W/m.K (ou 0,47 BTU/hr.ft.F).

L'espace entre le substrat intérieur 11 et le substrat intermédiaire 12 est constitué par une lame de gaz intérieure 14, et l'espace entre le substrat extérieur 13 et le substrat intermédiaire 12 est constitué par une lame de gaz extérieure 15, l'épaisseur des lames de gaz étant d'au moins 4 mm et adaptée en fonction des performances souhaitées du coefficient de transfert thermique U, sans être toutefois supérieure à 16 mm.

Au moins l'une des lames de gaz est constitué d'un gaz rare qui est choisi parmi l'argon, le krypton ou le xénon, selon un taux de remplissage d'au moins 85%. Pour un coefficient U encore amélioré, il sera préféré un remplissage avec au moins 92% de krypton ou de xénon.

Lorsque plusieurs lames de gaz sont contenues dans le vitrage, l'une d'elle peut être de l'air, et dans ce cas l'épaisseur de la lame d'air est d'au moins 10 mm.

Le vitrage comporte un revêtement bas-émissif 30 disposé sur une partie au moins de la face 13b du substrat extérieur 13 en regard de l'intérieur du vitrage (face 2), et/ou un autre revêtement bas-émissif 31 du même type déposé sur une partie au moins de la face 12a du substrat intermédiaire 12 en regard du substrat intérieur 11 (face 4).

Les revêtements bas-émissifs pourraient aussi être prévus en faces 2 et 3. Et lorsqu'il est simplement prévu un seul revêtement, il est de préférence disposé sur la surface associée à l'épaisseur de lame de gaz la plus épaisse.

Les revêtements bas émissifs sont à base de couches de métal et d'oxydes métalliques qui peuvent être obtenues par différents procédés : par des procédés sous vide (évaporation thermique, pulvérisation cathodique, par magnétron) ou par pyrolyse de composés organo-métalliques projetés par un gaz vecteur sous forme liquide, solide ou gazeuse sur la surface du substrat chauffé.

De préférence, les couches métalliques sont à base d'argent, et les couches d'oxydes métalliques sont à base de composés de zinc, d'étain, de titane, d'aluminium, de nickel, de chrome, d'antimoine (Sb), de nitrures ou d'un mélange d'au moins deux de ces composés, et éventuellement de couches bloquantes telles qu'un métal bloqueur ou un alliage métallique bloqueur, du type Ti, en couche supérieure de l'argent.

A titre d'exemples, on peut citer les empilements suivants, pour lesquels la notation (TiO₂) signifie qu'il s'agit d'un élément optionnel :
Verre/SnO₂/(TiO₂)/ZnO/Ag/Ti ou NiCr ou NiCrOₓ/ZnO/SnO₂ ou Si₃N₄/SnZnOₓ :Sb ou TiOₓ
Verre/SnO₂/TiO₂/ZnO/Ag/NiCrOₓ/(TiO₂)/SnO₂/SnZnOₓ :Sb

On peut pour plus de détails, en particulier quant aux variantes de réalisation de ces empilements, d'épaisseurs et de quantité de composés, se référer aux demandes de brevet FR 2783918 ou EP1042247.

Selon l'invention, le type de revêtement permet un compromis adapté entre la qualité optique du substrat, en particulier concernant sa transmission lumineuse dans le visible, et sa qualité de réflexion dans l'infrarouge.

Le revêtement bas émissif utilisé dans le vitrage de l'invention présente une émissivité inférieure ou égale à 0,3, de préférence inférieure ou égale à 0,05, et une transmission lumineuse supérieure à 75 %, de préférence supérieure à 85 %.

Aussi, on pourra utiliser comme substrat pourvu d'un tel revêtement, le produit PLANITHERM^{®} FUTUR N de la société SAINT-GOBAIN GLASS qui présente en verre de 4 mm d'épaisseur une émissivité de 0,04 et une transmission lumineuse de 88,4%.

Un autre produit convenant également selon l'invention est le PLANITHERM^{®} ULTRA de la société SAINT-GOBAIN GLASS qui présente en verre de 4 mm d'épaisseur une émissivité de 0,02 et une transmission lumineuse de 86,7%. Avec un tel produit utilisé pour l'un ou tous les substrats, le coefficient U pourra encore être meilleur en terme d'isolation qu'avec le produit PLANITHERM^{®} FUTUR N mais le vitrage perdra légèrement en transmission lumineuse.

De plus, au moins un revêtement anti-reflet 32 peut être prévu sur un ou plusieurs substrats, de préférence en face 1 et/ou 3 et/ou 5, ce qui présente l'avantage, outre sa fonction anti-reflet, d'augmenter la transmission lumineuse du vitrage et d'assurer encore une meilleure visibilité des produits dans la vitrine.

Enfin, le vitrage comporte un revêtement anti-givre 40 associé à la face externe 11 a du substrat intérieur 11. Ce revêtement peut être un couche déposée directement sur le substrat ou déposée sur un film plastique rendu solidaire du substrat.

En particulier, ce revêtement antigivre permet lorsque le vitrage pourvu du revêtement antigivre est mis en contact, du côté du revêtement avec une ambiance de température descendant à au plus -30°C, en particulier -15°C,-18°C ou -24°C, puis mis en contact avec une atmosphère à température au moins égale à 0, de préférence comprise entre 10 et 35, notamment 15 et 30 et en particulier 23 et 27°C et avec au moins 25 % d'humidité résiduelle, aucun givre ne se forme pendant 12 s au moins, de préférence 1 min au moins, en particulier 2 min au moins, voire aussi longtemps que 3 min au moins.

La valeur de 3 minutes, conformément à la norme EN441, est donnée pour des conditions usuelles d'utilisation dans un magasin, il va de soi que le revêtement réalise aussi sa fonction antigivre pour toute ouverture, quelque soit la fréquence d'ouverture de l'ouvrant d'une durée quelconque inférieure à 3 min et dès que la température du côté du revêtement est égale ou inférieure à 0°C, tandis que la température du côté opposé est à une température positive, et même accompagnée d'une humidité importante.

Le revêtement antigivre est adsorbant et absorbant.

Il est adsorbant en ce sens que les molécules d'eau arrivant sur la surface du substrat s'accrochent à la surface, se lient à la surface, ce qui permet au revêtement de jouer pleinement sa fonction d'absorption.

Le revêtement est absorbant (hydrophile) car les molécules d'eau pénètrent en lui pour être ainsi absorbées.

Le revêtement comporte un composé antigel abaissant la température de cristallisation tel qu'un sel, notamment KCl, NaCl ou équivalent en solution et/ou un alcool et/ou un polymère, copolymère, prépolymère ou oligomère hydrophile approprié, éventuellement dans l'eau, et éventuellement un ou plusieurs tensioactifs, ce composé présentant éventuellement un caractère hydrophobe sur une partie de sa surface.

Ainsi, le composé antigel permet de créer des liaisons entre ledit composé et les molécules d'eau, empêchant les molécules d'eau de se lier entre elles et de former des cristaux d'eau constituant le givre.

En tant qu'alcools dans le composé antigel, sont notamment employés l'éthanol, l'isopropanol.

Les polymères, copolymères, prépolymères ou oligomères hydrophiles constituants la solution sont notamment à base de polyvinylpyrrolidone du type poly (n-vinyl-2 pyrrolidone) ou poly (1-vinyl pyrrolidone), polyvinylpyrridine du type poly (n-vinyl-2 pyrridine), du type poly (n-vinyl-3-pyrridine), du type poly (n-vinyl-4-pyrridine), polyacrylate du type poly (2-hydroxyethylacrylate), polyacrylamide du type poly (N',N-hydroxyacrylamide), polyvinylacétate, polyacrylonitrile, du type polyol tel que polyvinylalcool, polyéthylène glycol, polypropylène glycol, polyoxyéthylène. En particulier, les copolymères sont à base de l'un au moins des monomères constituant ces polymères.

Le choix du polymère hydrophile et de la porosité permet notamment de régler la vitesse et la capacité d'absorption en eau. La porosité de la couche est avantageusement comprise entre 0,1 et 100 cm³/g et de préférence inférieure à 20 cm³/g. La porosité définit le volume de vide des pores par unité de masse de la couche.

Comme tensioactifs peuvent être cités des composés comprenant une partie lipophile Y, qui peut être une chaîne aliphatique linéaire, ramifiée ou insaturée ou une chaîne aromatique ou alkylaromatique, et une tête hydrophile ionique ou non.

Des exemples en sont :
- tensioactifs anioniques : Y-CO₂⁻M⁺; Y-OSO₃⁻M⁺ ; Y-SO₃⁻M⁺ ; sulfonate de dodécylbenzène ; alkyl sufonate ; acide gras et ester d'acide gras sulfoné ; alkylarylsulfonate ;
- tensioactifs cationiques : Y-(R)ₙNH⁺₍₄₋ₙ₎, X⁻ ; Y-R₄N⁺, X⁻ ; alkyltriméthylammonium ; alkylbenzyldiméthylammonium ; sels d'imidazolinium ; sels d'aminé ;
- zwitterioniques : Y-N⁺ ........ CO₂⁻ ; Y-N⁺ ....... SO₃⁻ ; bétaïnes ; sulfobétaïnes ; sels d'imidazolium ;
- non ioniques : Y-OR ; Y-OH ; Y-CO₂R ; Y-CONHR ; Y-(CH₂⁻ CH₂-O)ₙ- ; polyol ; alcool ; acide ; ester ; alcool gras polyéthoxylé.

En outre, on recherche une durabilité de la fonctionnalité antigivre du revêtement, ce qui peut nécessiter d'améliorer la tenue mécanique de la couche intégrant le composé antigel, en particulier quand celle-ci est susceptible d'être soumise à un contact mécanique occasionnel, ou à un nettoyage... A cette fin, le composé antigel peut être réticulé et/ou associé à au moins un autre composé de manière à établir une interaction physique ou bien une interaction chimique avec lui, et/ou encore dispersé dans une matrice solide, organique ou minérale par exemple ou mixte du type ORMOCER (Organically Modified Ceramics), ou solgel.

Par interaction physique, on entend ici une liaison hydrogène, une interaction polaire du type Van der Wals ou une interaction hydrophobe aptes à réaliser un renforcement mécanique assimilable à une réticulation. Cette interaction physique est par exemple réalisée en mélangeant du polyvinylpyrrolidone en tant que composé antigel et du polyuréthane en tant que composé matriciel audit composé antigel.

L'interaction chimique est quant à elle créée par le mélange du composé antigel et d'au moins un autre composé de façon à créer une liaison covalente entre eux, le mélange ayant subi de manière connue un traitement thermique par exemple, ou une réticulation UV, une réticulation à température ambiante, etc... Il est ainsi possible de mélanger un polyol en tant que composé antigel avec un autre composé comportant des fonctions isocyanate, de chauffer ce mélange pour obtenir un polyuréthane présentant, la fonctionnalité d'hydrophilie par le composé antigel, et une tenue mécanique par l'interaction chimique entre les fonctions hydroxyle du polyol et les fonctions isocyanate.

Pour des exemples particuliers de composition, on peut se référer aux demandes de brevet WO 00/71481 et FR 0550271.

Dans ce premier mode de réalisation de l'invention, plusieurs variantes peuvent être envisagées selon les performances souhaitées du coefficient de transfert thermique U, accompagnées d'un compromis sur l'encombrement du vitrage, son poids et ses qualités optiques.

Le tableau I ci-dessous résume plusieurs exemples de réalisation A à E de triples vitrages qui répondent aux performances d'isolement thermique souhaitées et de non formation de buée et de givre, sans avoir à chauffer le vitrage.

Sont indiqués dans ce tableau, l'épaisseur globale du vitrage, les épaisseurs des substrats verriers, la ou les faces du vitrage incluant le revêtement bas émissif, les épaisseurs des lames de gaz, le type de gaz, la transmission lumineuse et la réflexion lumineuse extérieure assurées par de tels vitrages, le coefficient U de transfert thermique du vitrage obtenu pour l'exemple par rapport au gaz choisi et au taux de remplissage de gaz (85% ou 92%), ainsi que le coefficient U_{w} de transfert thermique global de l'ouvrant incorporant de tels vitrages.

Pour chacun de ces exemples :
- l'intercalaire à basse conductivité thermique 50 est constitué de deux éléments distincts pour chacun des deux espaces du vitrage ; il correspond au produit SWISSPACER V^{®} de la société SAINT-GOBAIN GLASS décrit plus haut;
- les revêtements bas-émissifs 30 et 31 sont déposés sur des substrats verriers qui correspondent aux produits PLANITHERM^{®} FUTUR N de SAINT-GOBAIN GLASS, hormis pour l'exemple A1 qui correspond à l'exemple A pour lequel l'un des substrats est remplacé par du PLANITHERM^{®} ULTRA de SAINT-GOBAIN GLASS dont les spécificités ont été décrites plus haut;
- le revêtement antigivre 40 est déposé directement sur le substrat verrier ; il s'agit du revêtement EVERCLEAR^{®} commercialisé par la société SAINT-GOBAIN GLASS ;
- les revêtements anti-reflet 32 sont déposés sur des substrats verriers et correspondent aux produits Vision-Lite Plus^{®} de SAINT-GOBAIN GLASS.

Le coefficient U de transfert thermique du vitrage a été calculé au centre du vitrage et selon les normes prEN 673 et prEN 410 ; aussi, ce calcul est indépendant du type d'intercalaire.

Le coefficient U_{w} de transfert thermique global de l'ouvrant est calculé pour les vitrages incorporés, respectivement, dans un encadrement en aluminium à rupture de pont thermique, encadrement conventionnel pour des enceintes réfrigérées, et dans un encadrement en PVC. Ce calcul, selon la norme EN ISO 10077-2, tient compte des dimensions de l'ouvrant, du vitrage, et de l'encadrement, ainsi que du type d'intercalaire et du type d'encadrement.

L'ouvrant est de format 1800 mm x 800 mm ; l'encadrement présente une section carrée de 40 mm x 40 mm avec un coefficient de transfert thermique U égal à 2,6 W/m².K pour l'aluminium et 1,8 W/m².K pour le PVC. Le vitrage est pris en feuillure sur une largeur de 25 mm.

**TABLEAU I**

| *Mode de réalisation* | *A* | *A1* | *B* | *B1* | *B2* | *C* | *D* | *E* |
|---|---|---|---|---|---|---|---|---|
| | | | | | | | | |
| *Epaisseur globale (mm)* | 29 | 29 | 29 | 29 | 29 | 29 | 35 | 35 |
| *Epaisseur du substrat extérieur (mm)* | 4 | 4 | 4 | 4 | 4 | 4 | 4 | 4 |
| *Epaisseur du substrat médian (mm)* | 4 | 4 | 4 | 4 | 4 | 4 | 4 | 4 |
| *Epaisseur du substrat intérieur (mm)* | 3 | 3 | 3 | 3 | 3 | 3 | 3 | 3 |
| *Couche face 1* | - | - | - | - | - | - | - | anti-reflet |
| *Couche face 2* | bas émissif | bas émissif | bas émissif | bas émissif | bas émissif | bas émissif | bas émissif | bas émissif |
| *Couche face 3* | - | - | - | - | - | - | - | anti-reflet |
| *Couche face 4* | bas émissif | bas émissif sur PLANITHER M^{®} ULTRA | bas émissif | - | bas émissif | bas émissif | bas émissif | bas émissif |
| *Couche face 5* | - | - | - | - | - | - | - | anti-reflet |
| *Couche face 6* | anti-givre | anti-givre | anti-givre | anti-givre | anti-givre | anti-givre | anti-givre | anti-givre |
| *Epaisseur de la lame extérieure (mm)* | 8 | 8 | 8 | 8 | 8 | 8 | 8 | 8 |
| *Type de gaz lame extérieure* | Argon | Argon | Krypton | Krypton | Krypton | Krypton | Argon | Argon |
| *Epaisseur de la lame intérieure (mm)* | 10 | 10 | 10 | 10 | 4 | 10 | 16 | 16 |
| *Type de gaz lame intérieure* | Argon | Argon | Krypton | Krypton | Krypton | Air | Argon | Argon |
| *Transmission lumineuse (%)* | 71 | 69 | 71 | 72 | 71 | 71 | 71 | 79 |
| *Réflexion extérieure (%)* | 15 | 16 | 15 | 17 | 15 | 15 | 15 | 7 |
| *Coefficient U avec taux de gaz 85% (W*/*m².K)* | 0,96 | 0,93 | 0,69 | 1,04 | 0,93 | 0,90 | 0,79 | 0,79 |
| *Coefficient U avec taux de gaz 92% (W*/*m².K)* | 0,93 | 0,91 | 0,64 | 0,98 | 0,86 | 0,86 | 0,77 | 0,77 |
| *Coefficient U_{w} avec taux de gaz 92% et encadrement aluminium (W*/*m².K)* | 1,16 | 1,14 | 0,89 | 1,21 | 1,09 | 1,09 | 1,01 | 1,01 |
| *Coefficient U_{w} avec taux de gaz 92% et encadrement PVG(W*/*m².K)* | 1,10 | 1,08 | 0,83 | 1,15 | 1,04 | 1,04 | 0,95 | 0,95 |

Ces vitrages présentent ainsi un coefficient de transfert thermique U inférieur à 1,1 W/m².K avec un taux de remplissage en gaz d'au moins 85%, et même inférieur à 0,80 W/m².K lorsque l'on utilise de l'argon selon une épaisseur de 16 mm pour l'une des lames de gaz (exemples D et E), et de préférence inférieur à 0,65 W/m².K avec du krypton pour les deux lames de gaz et selon un taux de remplissage d'au moins 92% (exemple B).

Le coefficient U_{w} de transfert thermique global de l'ouvrant dans lequel est incorporé de tels vitrages est ainsi inférieur ou égal à 1,25 W/m².K. avec un taux de remplissage en gaz d'au moins 92%.

Ces vitrages permettent ainsi d'obtenir une transmission lumineuse d'au moins 67% et une réflexion lumineuse extérieure inférieure à 18%. Les chiffres donnés tiennent compte de la présence de la couche anti-givre, celle-ci n'abaissant la transmission lumineuse que de l'ordre de 0,5%.

Pour l'exemple A1, comme déjà expliqué plus haut, l'utilisation du substrat verrier bas émissif PLANITHERM^{®} ULTRA permet, comparativement à l'exemple A, d'augmenter encore les performances d'isolation thermique, bien que par ailleurs, le vitrage perde légèrement en qualité optique tout en conservant néanmoins des valeurs très acceptables.

L'utilisation d'une couche anti-reflet, par exemple, en faces 1, 3 et 5 (exemple E) se traduit par une transmission globale de 79,8 % avec une réflexion lumineuse réduite à 7,2%, fournissant au vitrage des qualités optiques très confortables.

L'exemple C n'utilisant qu'une seule lame de krypton peut être préféré à l'exemple B pour des soucis de prix de revient du vitrage car le krypton est un gaz onéreux.

D'autre part, cet exemple C permet de montrer aussi le cas où se produirait une fuite complète du gaz pour l'une des deux lames de l'exemple B.

Enfin, il est estimé qu'au cours du temps la perte de gaz dans un vitrage est évaluée à 1% par an (norme prEN 1279-3). Aussi, après plusieurs années, un vitrage voit son taux de gaz chuter et par conséquent sa performance d'isolation thermique chuter également. La ligne du tableau indiquant le coefficient U avec un taux de remplissage de 85% permet par ailleurs de simuler la performance thermique d'un vitrage après 7 ans et rempli au départ avec 92% de gaz.

La figure 2 illustre un second mode de réalisation de l'invention pour lequel l'ouvrant 1 comporte un double vitrage isolant 20 rempli de xénon et/ou de krypton et/ou d'argon, dépourvu d'élément chauffant et comportant au moins un revêtement bas-émissif 30 et un revêtement anti-givre 40. Ce double vitrage présente un coefficient U de transfert thermique inférieur à 1,2 W/m².K, de préférence inférieur à 1,15 W/m².K., et une transmission lumineuse d'au moins 75%.

Le double vitrage 20 comporte deux substrats en verre 21 et 22, respectivement destinés à être en contact de l'ambiance de l'enceinte réfrigérée et de l'ambiance extérieure. Ils sont espacés par un intercalaire 50 à basse conductivité thermique, tel que celui décrit dans le premier mode de réalisation.

La lame de gaz 23 entre les deux substrats présente une épaisseur comprise entre 4 et 16 mm, et de préférence d'au moins 8 mm.

Un revêtement bas-émissif 30 est disposé sur au moins une face intérieure du vitrage, en face 2 et/ou en face 3. Le revêtement est du type de ceux décrits dans le premier mode de réalisation, à base d'argent et d'oxydes métalliques.

Le revêtement anti-givre 40 est déposé sur la face externe 21 a du substrat intérieur et correspond à celui décrit dans le premier mode de réalisation

Un revêtement anti-reflet 32 peut être prévu sur au moins l'un des substrats, de préférence en face 1 et/ou 3 du vitrage.

Le tableau Il ci-dessous illustre trois exemples F, G et H de double vitrage selon l'invention. Le coefficient U de transfert thermique a été calculé au centre du vitrage et selon la norme prEN 673 et prEN 410 ; aussi, ce calcul est indépendant du type d'intercalaire.

Le revêtement bas émissifs correspond au PLANITHERM^{®} FUTUR N de SAINT-GOBAIN GLASS. Le revêtement antigivre correspond à EVERCLEAR^{®} de SAINT-GOBAIN GLASS, et le revêtement anti-reflet correspond à Vision-Lite Plus^{®} de SAINT-GOBAIN GLASS.

De manière similaire au premier mode de réalisation, le coefficient U_{w} de transfert thermique global de l'ouvrant dans lequel sont incorporés ces types de double vitrage a été calculé comme expliqué plus haut avec les mêmes dimensions, type d'intercalaire, type d'encadrement.

**TABLEAU II**

| *Mode de réalisation* | *F* | *G* | *H* |
|---|---|---|---|
| *Epaisseur globale (mm)* | 16 | 16 | 18 |
| *Epaisseur du substrat extérieur (mm)* | 4 | 4 | 4 |
| *Epaisseur du substrat intérieur (mm)* | 4 | 4 | 4 |
| *Epaisseur de la lame (mm)* | 8 | 8 | 10 |
| *Couche face 1* | - | anti-reflet | - |
| *Couche face 2* | bas émissif | Bas émissif | bas émissif |
| *Couche face 3* | bas émissif | Bas émissif | bas émissif |
| *Couche face 4* | anti-givre | anti-givre | anti-givre |
| *Epaisseur de la lame (mm)* | 8 | 8 | 10 |
| *Type de gaz lame extérieure* | Xénon | Xénon | Krypton |
| *Transmission lumineuse (%)* | 78 | 81 | 78 |
| *Réflexion extérieure (%)* | 9,6 | 6,0 | 9,6 |
| *Coefficient U avec taux de gaz 85% (W*/*m².K)* | 1,12 | 1,12 | 1,08 |
| *Coefficient U avec taux de gaz 92% (W*/*m2.K)* | 0,99 | 0,99 | 1,01 |
| *Coefficient U_{w} avec taux de gaz 92% et un encadrement aluminium (W*/*m².K)* | 1,22 | 1,22 | 1,23 |
| *Coefficient U_{w} avec taux de gaz 92% et un encadrement PVC(W*/*m².K)* | 1,16 | 1,16 | 1,18 |

Ces vitrages, adaptés pour des ouvrants requerrant un faible encombrement car présentant une épaisseur totale réduite, présentent ainsi un coefficient U de transfert thermique inférieur à 1,15 W/m².K selon un taux de gaz de 85%, et inférieur à 1,05 W/m².K selon un taux de gaz d'au moins 92%. Les ouvrants présentent ainsi un coefficient U_{w} de transfert thermique global inférieur à 1,25 W/m².K selon un taux de gaz d'au moins 92% avec un encadrement aluminium, et même inférieur à 1,20 W/m².K selon un taux de gaz d'au moins 92% avec un encadrement PVC.

La transmission lumineuse pour les exemples F et G est d'au moins 78% et passe très avantageusement à 81,5% lorsqu'un revêtement anti-reflet est ajouté, avec respectivement une réflexion lumineuse de 9,6% et 6,2%.

Les vitrages selon les premier et second modes de réalisation de l'invention permettent de répondre aux classes d'ambiance 2, 3, 4 et 5 données selon la norme EN441, et reprises dans le tableau III ci-dessous, et répondent en particulier à la classe 6 lorsque le coefficient de transfert thermique U est en dessous de 0,8 tel que pour les exemples B, D et E.

**TABLEAU III**

| *Classe d'ambiance Suivant norme EN441* | *Température* | *Hygrométrie relative* | *Point de rosée* |
|---|---|---|---|
| | °*C* | *%* | °*C* |
| *2* | 22 | 65 | 15,1 |
| *3* | 25 | 60 | 16,7 |
| *4* | 30 | 55 | 20,0 |
| *5* | 40 | 40 | 23,8 |
| *6* | 27 | 70 | 21,1 |

## Revendications

1. Vitrage isolant (10,20) destiné en particulier à un ouvrant d'enceinte réfrigérée comprenant au moins deux substrats en verre, au moins un intercalaire (50) à basse conductivité thermique qui maintient espacés les deux substrats, un revêtement bas émissif (30,31) qui est déposé au moins en partie sur au moins un des substrats, **caractérisé en ce que**
- l'intercalaire (50) présente une conductivité thermique inférieure 1 W/m.K, de préférence inférieur à 0,3 W/m.K,
- l'espace entre au moins deux substrats est rempli d'au moins un gaz rare,
- le vitrage est dépourvu d'élément chauffant,
- le vitrage présente un coefficient de conductivité thermique U inférieur à 1,2 W/m².K, de préférence inférieur à 1,15 W/m².K avec un remplissage de gaz d'au moins 85%,
- le vitrage présente une transmission lumineuse d'au moins 67% et une réflexion lumineuse inférieure à 18%, 1
- le vitrage comporte en outre un revêtement antigivre (40) déposé sur une partie au moins de la face externe d'un substrat.

2. Vitrage selon la revendication 1, **caractérisé en ce que** le gaz est choisi parmi l'argon, le krypton et le xénon.

3. Vitrage selon la revendication 2 ou 3, **caractérisé en ce qu'**un revêtement bas-émissif (30,31) est au moins disposé en face 2 et/ou 3 et/ou 4.

4. Vitrage selon l'une des revendications 1 à 3, **caractérisé en ce qu'**un revêtement anti-reflet (32) est déposé sur au moins l'un des substrats, de préférence en face 1 et/ou en face 3 et/ou en face 5 du vitrage.

5. Triple vitrage isolant (10) selon la revendication 1, **caractérisé en ce qu'**il comporte trois substrats verriers, un premier substrat (11) dont la face externe (11a) est destinée à être en contact avec l'intérieur de l'enceinte en position fermée de l'ouvrant, un second substrat ou substrat intermédiaire (12), et un troisième substrat (13) dont la face externe (13a) est destinée à être en contact avec l'ambiance extérieure de l'enceinte, et séparés entre eux par l'intercalaire (50) à basse conductivité thermique,
- l'épaisseur des substrats étant comprise entre 2 et 5 mm, et de préférence égale à 3 ou 4 mm,
- au moins l'un des espaces entre les substrats (11, 12, 13) étant rempli d'au moins un gaz rare,
- l'épaisseur des lames de gaz étant d'au moins 4 mm,
- un revêtement bas émissif (30, 31) étant déposé en face 2 et/ou 4 du vitrage,
- le revêtement antigivre (40) étant déposé sur une partie au moins de la face externe (11a) du troisième substrat,
- le vitrage présentant un coefficient de conductivité thermique U inférieur à 1,1 W/m².K, voire même inférieur à 0,95 ou 0,80, avec un remplissage de gaz d'au moins 85%;
- le vitrage présente une transmission lumineuse d'au moins 67% et une réflexion lumineuse extérieure inférieure à 18%.

6. Triple vitrage selon la revendication 5, **caractérisé en ce qu'**il comporte un revêtement bas émissif (30, 31) sur les faces 2 et 4 et présente un coefficient de transfert thermique U inférieur à 1,0 W/m².K.

7. Triple vitrage selon l'une des revendications 5 ou 6, **caractérisé en ce que** le revêtement bas émissif est déposé sur la face du vitrage associée à la lame de gaz la plus épaisse.

8. Triple vitrage selon l'une quelconque des revendications 5 à 7, **caractérisé en ce qu'**au moins un revêtement anti-reflet est déposé sur l'une des faces du vitrage, de préférence sur au moins l'une des faces 1, 3 ou 5.

9. Triple vitrage selon l'une quelconque des revendications 5 à 8, **caractérisé en ce que** l'une des lames de gaz présente une épaisseur de 8 mm, tandis que l'autre lame de gaz présente une épaisseur d'au moins 10 mm, les lames de gaz étant de l'argon.

10. Triple vitrage selon l'une quelconque des revendications 5 à 8, **caractérisé en ce que** l'une des lames de gaz est du krypton et présente une épaisseur de 8 mm, tandis que l'autre lame de gaz est de l'air et présente une épaisseur d'au moins 10 mm.

11. Double vitrage isolant (20) selon la revendication 1, **caractérisé en ce qu'**il comprend deux substrats verriers, un premier substrat (21) dont la face externe (21 a) est destinée à être en contact avec l'intérieur de l'enceinte en position fermée de l'ouvrant, un second substrat (22) dont la face externe est destinée à être en contact avec l'ambiance extérieure de l'enceinte, séparés entre eux par l'intercalaire (50) à basse conductivité thermique, l'espace entre les substrats étant rempli d'un gaz rare,
- l'épaisseur des substrats étant égale à 3 ou 4 mm,
- l'espace entre les substrats (21, 22) étant rempli d'au moins un gaz rare,
- l'épaisseur de la lame de gaz (23) étant d'au moins 8 mm,
- un revêtement bas émissif étant déposé au moins en face 2 du vitrage,
- le revêtement antigivre (40) étant déposé sur une partie au moins de la face externe (21 a) du premier substrat (21),
- le vitrage présentant un coefficient de conductivité thermique U inférieur à 1,15 W/m².K avec un remplissage de gaz d'au moins 85%;
- le vitrage présentant une transmission lumineuse d'au moins 75% et une réflexion lumineuse extérieure inférieure à 12%.

12. Double vitrage selon la revendication 11, **caractérisé en ce qu'**un autre revêtement bas émissif (31) est déposé en face 3 du vitrage.

13. Double vitrage selon la revendication 11 ou 12, **caractérisé en ce qu'**il présente un coefficient de conductivité thermique U inférieur à 1,05 W/m².K avec un remplissage de gaz d'au moins 92%.

14. Double vitrage selon l'une des revendications 11 à 13, **caractérisé en ce que** la lame de gaz est du krypton.

15. Double vitrage selon l'une des revendications 11 à 14, **caractérisé en ce que** la lame de gaz est du xénon selon une épaisseur de 8 mm.

16. Double vitrage selon l'une des revendications 11 à 15, **caractérisé en ce qu'**il comporte en face 1 et/ou 3 un revêtement anti-reflet (32), et présente une transmission lumineuse de plus de 80% et une réflexion lumineuse extérieure inférieure à 10%.

17. Vitrage selon l'une quelconque des revendications précédentes, **caractérisé en ce que** le revêtement antigivre (40) est tel que lorsque le vitrage pourvu du revêtement antigivre est mis en contact, du côté du revêtement avec une ambiance de température descendant à au plus-30°C, en particulier -15°C, -18°C ou -24°C, puis mis en contact avec une atmosphère à température au moins égale à 0, de préférence comprise entre 10 et 35, notamment 15 et 30 et en particulier 23 et 27°C et avec au moins 25 % d'humidité résiduelle, aucun givre ne se forme pendant 12 s au moins, de préférence 1 min au moins, en particulier 2 min au moins, voire aussi longtemps que 3 min au moins.

18. Vitrage selon l'une quelconque des revendications précédentes, **caractérisé en ce que** le revêtement antigivre (40) comporte un composé antigel abaissant la température de cristallisation tel qu'un sel, notamment KCI, NaCl ou équivalent en solution, et/ou un alcool, et/ou un polymère, copolymère, prépolymère ou oligomère hydrophile approprié, éventuellement dans l'eau, et éventuellement un ou plusieurs tensioactifs, ce composé présentant éventuellement un caractère hydrophobe sur une partie de sa surface.

19. Vitrage selon la revendication 18, **caractérisé en ce que** le composé antigel est associé à au moins un autre composé de manière à obtenir une interaction physique ou chimique pour assurer un renfort mécanique du revêtement.

20. Vitrage selon la revendication 19, **caractérisé en ce que** le composé antigel est du polyvinylpyrrolidone qui est associé à un polyuréthane de façon à créer une interaction physique.

21. Vitrage selon la revendication 18, **caractérisé en ce que** le composé antigel est un polyol qui est associé à au moins une fonction isocyanate de façon à créer une interaction chimique.

22. Vitrage selon l'une quelconque des revendications précédentes, **caractérisé en ce que** l'intercalaire, disposé entre les substrats, comporte une première barrière d'étanchéité constituée d'un corps en matière thermoplastique, du type styrène acrylonitrile (SAN) ou polypropylène, mélangée à des fibres de renforcement, de type en verre, et d'une feuille métallique, du type en aluminium ou en inox, couvrant en partie la matière thermoplastique, ainsi qu'une seconde barrière d'étanchéité contre les liquides et la vapeur, du type polysulfure.

23. Vitrage selon l'une quelconque des revendications 1 à 21, **caractérisé en ce que** l'intercalaire est constitué sur au moins une partie de la périphérie du vitrage d'un profilé sensiblement plat qui est solidaire des tranches des substrats et constitué d'inox, d'aluminium ou de matière plastique armé de fibres de renforcement, et comprenant sur la face opposée à la lame de gaz un revêtement métallique constituant une barrière d'étanchéité à la vapeur, aux gaz et aux liquides.

24. Vitrage selon la revendication 23, **caractérisé en ce que** l'intercalaire présente une résistance linéique au flambage d'au moins 400 N/m.

25. Vitrage selon l'une quelconque des revendications précédentes, **caractérisé en ce qu'**au moins les substrats extérieurs (11, 13, 21, 22) sont en verre trempé.

26. Ouvrant incorporant un vitrage selon l'une quelconque des revendications précédentes.

27. Ouvrant selon la revendication 26, comportant un encadrement pour supporter le vitrage formé d'aluminium à rupture de pont thermique, **caractérisé en ce qu'**il présente un coefficient U_{w} de transfert thermique global inférieur à 1,25 W/m².K pour un remplissage de gaz d'au moins 92%.

28. Ouvrant selon la revendication 26, comportant un encadrement pour supporter le vitrage formé de PVC, **caractérisé en ce qu'**il présente un coefficient U_{w} de transfert thermique global inférieur à 1,20 W/m².K pour un remplissage de gaz de 92%.

29. Enceinte réfrigérée comportant un ouvrant selon l'une des revendications 26 à 28.

## Patentansprüche

1. Isolierverglasung (10, 20), insbesondere für einen Türflügel eines gekühlten Raums, umfassend wenigstens zwei Glassubstrate, wenigstens einen Abstandshalter (50) mit niedriger Wärmeleitfähigkeit, der die beiden Substrate beabstandet hält, eine niedrig emittierende Beschichtung (30, 31), die wenigstens teilweise auf wenigstens einem der Substrate aufgebracht ist, **dadurch gekennzeichnet, dass**
- der Abstandshalter (50) eine Wärmeleitfähigkeit von unter 1 W/m.K, vorzugsweise unter 0,3 W/m.K aufweist,
- der Raum zwischen wenigstens zwei Substraten mit wenigstens einem Edelgas gefüllt ist,
- die Verglasung kein Heizelement aufweist,
- die Verglasung eine Wärmeleitzahl U von unter 1,2 W/m².K, vorzugsweise unter 1,15 W/m².K, bei einer Gasfüllung von wenigstens 85 %, aufweist,
- die Verglasung eine Lichttransmission von wenigstens 67 % und eine Lichtreflexion von weniger als 18 % aufweist,
- die Verglasung ferner eine Vereisungsschutzbeschichtung (40) umfasst, die auf wenigstens einem Teil der Außenseite eines Substrats aufgebracht ist.

2. Verglasung nach Anspruch 1, **dadurch gekennzeichnet, dass** das Gas aus Argon, Krypton und Xenon ausgewählt ist.

3. Verglasung nach Anspruch 2 oder 3, **dadurch gekennzeichnet, dass** eine niedrig emittierende Beschichtung (30, 31) wenigstens auf Seite 2 und/oder 3 und/oder 4 angeordnet ist.

4. Verglasung nach einem der Ansprüche 1 bis 3, **dadurch gekennzeichnet, dass** eine Antireflex-Beschichtung (32) auf wenigstens einem der Substrate, vorzugsweise auf Seite 1 und/oder auf Seite 3 und/oder auf Seite 5 der Verglasung aufgebracht ist.

5. Dreifachisolierverglasung(10) nach Anspruch 1, **dadurch gekennzeichnet, dass** sie drei Glassubstrate umfasst, ein erstes Substrat (11), dessen Außenseite (11a) dazu bestimmt ist, in geschlossener Stellung des Türflügels mit der Innenseite des Raums in Kontakt zu sein, ein zweites Substrat oder Zwischensubstrat (12) und ein drittes Substrat (13), dessen Außenseite (13a) dazu bestimmt ist, mit der Außenumgebung des Raums in Kontakt zu sein, und die durch den Abstandshalter (50) mit niedriger Wärmeleitfähigkeit voneinander getrennt sind,
- wobei die Dicke der Substrate zwischen 2 und 5 mm liegt und vorzugsweise gleich 3 oder 4 mm beträgt,
- wobei wenigstens einer der Räume zwischen den Substraten (11, 12, 13) mit wenigstens einem Edelgas gefüllt ist,
- wobei die Dicke der Gasfüllungen wenigstens 4 mm beträgt,
- wobei eine niedrig emittierende Beschichtung (30, 31) auf Seite 2 und/oder 4 der Verglasung aufgebracht ist,
- wobei die Vereisungsschutzbeschichtung (40) auf wenigstens einem Teil der Außenseite (11a) des dritten Substrats aufgebracht ist,
- wobei die Verglasung eine Wärmeleitzahl U von unter 1,1 W/m².K, sogar unter 0,95 oder 0,80, bei einer Gasfüllung von wenigstens 85 %, aufweist,
- die Verglasung eine Lichttransmission von wenigstens 67 % und eine äußere Lichtreflexion von weniger als 18 % aufweist.

6. Dreifachverglasung nach Anspruch 5, **dadurch gekennzeichnet, dass** sie eine niedrig emittierende Beschichtung (30, 31) auf den Seiten 2 und 4 umfasst und eine Wärmeübergangszahl U von unter 1,0 W/m².K aufweist.

7. Dreifachverglasung nach einem der Ansprüche 5 oder 6, **dadurch gekennzeichnet, dass** die niedrig emittierende Beschichtung auf der der dicksten Gasfüllung zugeordneten Seite der Verglasung aufgebracht ist.

8. Dreifachverglasung nach einem der Ansprüche 5 bis 7, **dadurch gekennzeichnet, dass** wenigstens eine Antireflex-Beschichtung auf einer der Seiten der Verglasung, vorzugsweise auf wenigstens einer der Seiten 1, 3 oder 5 aufgebracht ist.

9. Dreifachverglasung nach einem der Ansprüche 5 bis 8, **dadurch gekennzeichnet, dass** eine der Gasfüllungen eine Dicke von 8 mm aufweist, während die andere Gasfüllung eine Dicke von wenigstens 10 mm aufweist, wobei die Gasfüllungen Argon sind.

10. Dreifachverglasung nach einem der Ansprüche 5 bis 8, **dadurch gekennzeichnet, dass** eine der Gasfüllungen Krypton ist und eine Dicke von 8 mm aufweist, während die andere Gasfüllung Luft ist und eine Dicke von wenigstens 10 mm aufweist.

11. Doppelisolierverglasung (20) nach Anspruch 1, **dadurch gekennzeichnet, dass** sie zwei Glassubstrate, ein erstes Substrat (21), dessen Außenseite (21 a) dazu bestimmt ist, in geschlossener Stellung des Türflügels mit der Innenseite des Raums in Kontakt zu sein, ein zweites Substrat (22), dessen Außenseite dazu bestimmt ist, mit der Außenumgebung des Raums in Kontakt zu sein, umfasst, die durch den Abstandshalter (50) mit niedriger Wärmeleitfähigkeit voneinander getrennt sind, wobei der Raum zwischen den Substraten mit einem Edelgas gefüllt ist,
- wobei die Dicke der Substrate gleich 3 oder 4 mm beträgt,
- wobei der Raum zwischen den Substraten (21, 22) mit wenigstens einem Edelgas gefüllt ist,
- wobei die Dicke der Gasfüllung (23) wenigstens 8 mm beträgt,
- wobei eine niedrig emittierende Beschichtung wenigstens auf Seite 2 der Verglasung aufgebracht ist,
- wobei die Vereisungsschutzbeschichtung (40) auf wenigstens einem Teil der Außenseite (21 a) des ersten Substrats (21) aufgebracht ist,
- wobei die Verglasung eine Wärmeleitzahl U von unter 1,15 W/m².K, bei einer Gasfüllung von wenigstens 85 % aufweist,
- wobei die Verglasung eine Lichttransmission von wenigstens 75 % und eine äußere Lichtreflexion von weniger als 12 % aufweist.

12. Doppelverglasung nach Anspruch 11, **dadurch gekennzeichnet, dass** eine weitere niedrig emittierende Beschichtung (31) auf Seite 3 der Verglasung aufgebracht ist.

13. Doppelverglasung nach Anspruch 11 oder 12, **dadurch gekennzeichnet, dass** sie eine Wärmeleitzahl U von unter 1,05 W/m².K, bei einer Gasfüllung von wenigstens 92 % aufweist.

14. Doppelverglasung nach einem der Ansprüche 11 bis 13, **dadurch gekennzeichnet, dass** die Gasfüllung Krypton ist.

15. Doppelverglasung nach einem der Ansprüche 11 bis 14, **dadurch gekennzeichnet, dass** die Gasfüllung Xenon in einer Dicke von 8 mm ist.

16. Doppelverglasung nach einem der Ansprüche 11 bis 15, **dadurch gekennzeichnet, dass** sie auf Seite 1 und/oder 3 eine Antireflex-Beschichtung (32) umfasst und eine Lichttransmission von mehr als 80 % sowie eine äußere Lichtreflexion von weniger als 10 % aufweist.

17. Verglasung nach einem der vorstehenden Ansprüche, **dadurch gekennzeichnet, dass** die Vereisungsschutzbeschichtung (40) derart ist, dass wenn die mit der Vereisungsschutzbeschichtung versehene Verglasung auf der Seite der Beschichtung mit einer Umgebung mit einer auf höchstens -30 °C, insbesondere -15 °C, - 18 °C oder -24 °C sinkenden Temperatur in Kontakt gebracht wird, anschließend mit einer Atmosphäre mit einer Temperatur von wenigstens gleich 0, vorzugsweise zwischen 10 und 35, vor allem 15 und 30 und insbesondere 23 und 27 °C und mit wenigstens 25 % Restfeuchtigkeit in Kontakt gebracht wird, sich für wenigstens 12 Sek., vorzugsweise wenigstens 1 Min., insbesondere wenigstens 2 Min., sogar solang wie wenigstens 3 Min. kein Reif bildet.

18. Verglasung nach einem der vorstehenden Ansprüche, **dadurch gekennzeichnet, dass** die Vereisungsschutzbeschichtung (40) eine die Kristallisierungstemperatur senkende Frostschutzverbindung umfasst, wie ein Salz, insbesondere KCI, NaCl oder entsprechendes in Lösung, und/oder einen Alkohol und/oder ein geeignetes hydrophiles Polymer, Copolymer, Vorpolymer oder Oligomer, eventuell in Wasser, sowie eventuell ein oder mehrere Tenside, wobei diese Verbindung eventuell einen hydrophoben Charakter auf einem Teil ihrer Fläche aufweist.

19. Verglasung nach Anspruch 18, **dadurch gekennzeichnet, dass** die Frostschutzverbindung mit wenigstens einer weiteren Verbindung kombiniert ist, um eine physikalische oder chemische Wechselwirkung zum Sicherstellen einer mechanischen Verstärkung der Beschichtung zu erzielen.

20. Verglasung nach Anspruch 19, **dadurch gekennzeichnet, dass** die Frost-schutzverbindung Polyvinylpyrrolidon ist, das mit einem Polyurethan kombiniert ist, um eine physikalische Wechselwirkung zu erzeugen.

21. Verglasung nach Anspruch 18, **dadurch gekennzeichnet, dass** die Frostschutzverbindung ein Polyol ist, der mit wenigstens einer Isocyanat-Funktion kombiniert ist, um eine chemische Wechselwirkung zu erzeugen.

22. Verglasung nach einem der vorstehenden Ansprüche, **dadurch gekennzeichnet, dass** der zwischen den Substraten angeordnete Abstandshalter eine erste Dichtungsbarriere, bestehend aus einem Körper aus thermoplastischem Material, vom Typ Styrol-Acrylnitril (SAN) oder Polypropylen, das mit Verstärkungsfasern, vom Typ aus Glas gemischt ist, und aus einer Metallfolie, vom Typ aus Aluminium oder aus rostfreiem Stahl, welche das thermoplastische Material teilweise bedeckt, sowie eine zweite Dichtungsbarriere gegen Flüssigkeiten und Dampf, vom Typ Polysulfid, umfasst.

23. Verglasung nach einem der Ansprüche 1 bis 21, **dadurch gekennzeichnet, dass** der Abstandshalter über wenigstens einen Teil des Umfangs der Verglasung von einem im Wesentlichen flachen Profil gebildet ist, das mit den Kanten der Substrate fest verbunden ist und aus rostfreiem Stahl, aus Aluminium oder aus mit Verstärkungsfasern bewehrtem Kunststoff besteht und auf der von der Gasfüllung abgewandten Seite eine Metallbeschichtung aufweist, die eine Dampf-, Gas- und Flüssigkeitsdichtigkeitsbarriere bildet.

24. Verglasung nach Anspruch 23, **dadurch gekennzeichnet, dass** der Abstandshalter eine längenbezogene Knickfestigkeit von wenigstens 400 N/m aufweist.

25. Verglasung nach einem der vorstehenden Ansprüche, **dadurch gekennzeichnet, dass** wenigstens die äußeren Substrate (11, 13, 21, 22) aus vorgespanntem Glas bestehen.

26. Türflügel, der eine Verglasung nach einem der vorstehenden Ansprüche beinhaltet.

27. Türflügel nach Anspruch 26, umfassend einen Rahmen zum Tragen der Verglasung, aus Aluminium mit Unterbrechung der Wärmebrücke, **dadurch gekennzeichnet, dass** er eine Gesamtwärmeübergangszahl U_{w} von unter 1,25 W/m².K bei einer Gasfüllung von wenigstens 92% aufweist.

28. Türflügel nach Anspruch 26, umfassend einen aus PVC ausgebildeten Rahmen zum Tragen der Verglasung **dadurch gekennzeichnet, dass** er eine Gesamtwärmeübergangszahl U_{w} von unter 1,20 W/m².K bei einer Gasfüllung von 92% aufweist.

29. Gekühlter Raum, der einen Türflügel nach einem der Ansprüche 26 bis 28 umfasst. '

## Claims

1. An insulating glazing unit (10, 20) intended in particular for an opening leaf of a refrigerated enclosure, comprising at least two glass substrates, at least one spacer (50) of low thermal conductivity which keeps the two substrates spaced apart, and a low-E (low-emissivity) coating (30, 31) that is deposited at least partly on at least one of the substrates, **characterized in that**:
- the spacer (50) has a thermal conductivity of less than 1 W/m.K, preferably less than 0.3 W/m.K;
- the air space between at least two substrates is filled with at least one rare gas;
- the glazing unit contains no heating element;
- the glazing unit has a thermal conductivity coefficient U of less than 1.2 W/m².K, preferably less than 1.15 W/m².K with a gas filling of at least 85%;
- the glazing unit has a light transmission of at least 67% and a light reflection of less than 18%; and
- the glazing unit further includes an anti-frost coating (40) deposited on at least part of the external face of a substrate.

2. The glazing unit as claimed in claim 1, **characterized in that** the gas is chosen from among argon, krypton and xenon.

3. The glazing unit as claimed in claim 2 or 3, **characterized in that** a low-E coating (30, 31) is placed at least on face 2 and/or face 3 and/or face 4.

4. The glazing unit as claimed in one of claims 1 to 3, **characterized in that** an antireflection coating (32) is deposited on at least one of the substrates, preferably on face 1 and/or on face 3 and/or on face 5 of the glazing unit.

5. An insulating triple glazing unit (10) as claimed in claim 1, **characterized in that** it comprises three glass substrates, namely a first substrate (11), the external face (11a) of which is intended to be in contact with the inside of the enclosure with the opening leaf in its closed position, a second substrate or intermediate substrate (12), and a third substrate (13), the external face (13a) of which is intended to be in contact with the external environment of the enclosure, these substrates being separated from one another by the spacer (50) of low thermal conductivity:
- the thickness of the substrates being between 2 and 5 mm, preferably being equal to 3 or 4 mm;
- at least one of the airspaces between the substrates (11, 12, 13) being filled with at least one rare gas;
- the thickness of the gas layers being at least 4 mm;
- a low-E coating (30, 31) being deposited on face 2 and/or face 4 of the glazing unit;
- the anti-frost coating (40) being deposited on at least part of the external face (11a) of the third substrate;
- the glazing unit having a thermal conductivity coefficient U of less than 1.1 W/m².K, or even less than 0.95 or 0.80 W/m².K, with a gas filling of at least 85%; and
- the glazing unit having a light transmission of at least 67% and an external light reflection of less than 18%.

6. The triple glazing unit as claimed in claim 5, **characterized in that** it includes a low-E coating (30, 31) on faces 2 and 4, and has a thermal transfer coefficient U of less than 1.0 W/m².K.

7. The triple glazing unit as claimed in either of claims 5 and 6, **characterized in that** the low-E coating is deposited on that face of the glazing unit which is associated with the thicker gas-layer.

8. The triple glazing unit as claimed in any one of claims 5 to 7, **characterized in that** at least one antireflection coating is deposited on one of the faces of the glazing unit, preferably on at least one of faces 1, 3 and 5. ,

9. The triple glazing unit as claimed in any one of claims 5 to 8, **characterized in that** one of the gas layers has a thickness of 8 mm, whereas the other gas layer has a thickness of at least 10 mm, the gas layers being argon.

10. The triple glazing unit as claimed in any one of claims 5 to 8, **characterized in that** one of the gas layers is krypton and has a thickness of 8 mm, whereas the other gas layer is air and has a thickness of at least 10 mm.

11. An insulating double glazing unit (20) as claimed in claim 1, **characterized in that** it comprises two glass substrates, namely a first substrate (21), the external face (21a) of which is intended to be in contact with the inside of the enclosure when the opening leaf is in its closed position, and a second substrate (22), the external face of which is intended to be in contact with the external environment of the enclosure, these being separated by the spacer (50) of low thermal conductivity, the airspace between the substrates being filled with a rare gas:
- the thickness of the substrates being equal to 3 or 4 mm;
- the airspace between the substrates (21, 22) being filled with at least one rare gas;
- the thickness of the gas layer (23) being at least 8 mm;
- a low-E coating being deposited at least on face 2 of the glazing unit;
- the anti-frost coating (40) being deposited on at least part of the external face (21a) of the first substrate (21) ;
- the glazing unit having a thermal conductivity coefficient U of less than 1.15 W/m².K with a gas filling of at least 85%; and
- the glazing unit having a light transmission of at least 75% and an external light reflection of less than 12%.

12. The double glazing unit as claimed in claim 11, **characterized in that** another low-E coating (31) is deposited on face 3 of the glazing unit.

13. The double glazing unit as claimed in claim 11 or 12, **characterized in that** it has a thermal conductivity coefficient U of less than 1.05 W/m².K with a gas filling of at least 92%.

14. The double glazing unit as claimed in one of claims 11 to 13, **characterized in that** the gas layer is krypton.

15. The double glazing unit as claimed in one of claims 11 to 14, **characterized in that** the gas layer is xenon with a thickness of 8 mm.

16. The double glazing unit as claimed in one of claims 11 to 15, **characterized in that** it includes, on face 1 and/or face 3, an antireflection coating (32) and has a light transmission of more than 80% and an external light reflection of less than 10%.

17. The glazing unit as claimed in any one of the preceding claims, **characterized in that** the anti-frost coating (40) is such that, when the glazing unit provided with the anti-frost coating is brought into contact, on the side of the coating, with a temperature environment falling to at most -30°C, in particular - 15°C, -18°C or -24°C, and then brought into contact with an atmosphere at a temperature of at least 0°, preferably between 10° and 35°, especially between 15° and 30° and in particular between 23° and 27°C and having a residual humidity of at least 25%, no frost formed for at least 12 s, preferably at least 1 minute, in particular at least 2 minutes, or even as long as at least 3 minutes.

18. The glazing unit as claimed in any one of the preceding claims, **characterized in that** the anti-frost coating (40) includes an antifreeze compound that lowers the crystallization temperature, such as a salt, especially KCl, NaCl or equivalent in solution, and/or an alcohol, and/or a suitable hydrophilic polymer, copolymer, prepolymer or oligomer, optionally in water, and optionally one or more surfactants, this compound optionally having a hydrophobic character on part of its surface.

19. The glazing unit as claimed in claim 18, **characterized in that** the antifreeze compound is combined with at least one other compound so as to obtain a physical or chemical interaction that mechanically reinforces the coating.

20. The glazing unit as claimed in claim 19, **characterized in that** the antifreeze compound is polyvinylpyrrolidone, this being combined with a polyurethane so as to create a physical interaction.

21. The glazing unit as claimed in claim 18, **characterized in that** the antifreeze compound is a polyol, this being combined with at least one isocyanate functional group so as to create a chemical interaction.

22. The glazing unit as claimed in any one of the preceding claims, **characterized in that** the spacer, placed between the substrates, comprises a first sealing barrier consisting of a body made of a thermoplastic, of the styrene acrylonitrile (SAN) or polypropylene type, said thermoplastic being blended with reinforcement fibers, of the glass type, and of a metal foil, of the aluminum or stainless steel type, which partly covers the thermoplastic, and also a second sealing barrier, which seals against liquids and vapor, of the polysulfide type.

23. The glazing unit as claimed in any one of claims 1 to 21, **characterized in that** the spacer consists, over at least part of the periphery of the glazing unit, of a substantially flat strip that is fastened to the edges of the substrates and is made of stainless steel, aluminum or plastic reinforced with reinforcement fibers, and comprising, on that face on the opposite side from the gas layer, a metal coating constituting a barrier that seals against vapor, gases and liquids.

24. The glazing unit as claimed in claim 23, **characterized in that** the spacer has a linear buckling strength of at least 400 N/m.

25. The glazing unit as claimed in any one of the preceding claims, **characterized in that** at least the outer substrates (11, 13, 21, 22) are made of toughened glass.

26. An opening leaf incorporating a glazing unit as claimed in any one of the preceding claims.

27. The opening leaf as claimed in claim 26, which includes a frame for supporting the glazing unit, said frame being formed from aluminum and having a thermal bridge break, **characterized in that** it has an overall heat transfer coefficient U_{w} of less than 1.25 W/m².K for a gas filling of at least 92%.

28. The opening leaf as claimed in claim 26, which includes a frame for supporting the glazing unit, said frame being formed from PVC, **characterized in that** it has an overall heat transfer coefficient U_{w} of less than 1.20 W/m².K for a gas filling of 92%.

29. A refrigerated enclosure, which includes an opening leaf as claimed in one of claims 26 to 28.
